# EUROPEAN PATENT SPECIFICATION

(11) **EP 1 889 987 B1**
(45) Date of publication and mention of the grant of the patent: **28.10.2009**
(21) Application number: 07113414.2
(22) Date of filing: 30.07.2007
(51) Int. Cl.: E04H 12/08

(54) **Flangeless support structures**
Flanschlose Stützstrukturen
Structures de support sans bride

(30) Priority: 18.08.2006 US 506421
(43) Date of publication of application: 20.02.2008
(73) Proprietor: GENERAL ELECTRIC COMPANY, Schenectady, NY 12345 (US)
(72) Inventor: Cairo, Ronald R., Greer, SC 29650 (US); Sathian, Sujith, Simpsonville, SC 29681 (US)
(74) Representative: Gray, Thomas

(56) References cited:
- EP-A- 0 310 369
- WO-A-2007/095940
- US-A- 1 722 671
- US-A- 3 536 138

## Description

The invention relates generally to tubular structures and more specifically to flangeless connections between sections of tubular support structures.

Tubular support structures have many and varied types of application. Some types of support structures exist where equipment is supported at elevated heights from the ground. These support structures may be tall and carry operating equipment of various weights at the top, thereby subjecting joints in these structures to high stress. The support structures may be used in many applications, including cellular phone towers, radar towers, and wind towers.

Wind turbine support towers are large structures, sometimes extending to significant heights to accommodate large wind turbine rotor blades and to strategically place the rotor blades within a wind path. For example, a typical tower may have a height of about 80m.

Techniques pertaining to the necessary metal assemblies are disclosed in US 3 536 138.

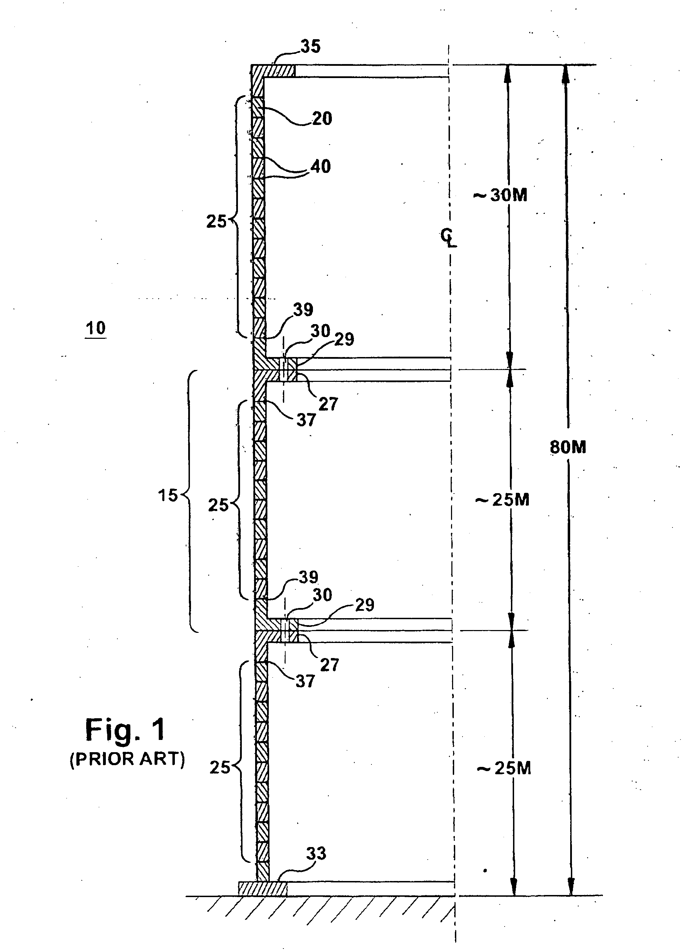

FIG. 1 illustrates an exemplary tubular structure fabricated with tubular sections of welded segment assemblies with flanges welded on the ends of the tubular sections. The tubular structure 10 may be built up from tubular sections 15, with flanges 27 and 29 on opposite ends that are bolted together to develop the structure height. The tubular sections 15 include tubular segments 20 of annular shape, also called "cans". Weld grooves are provided on either the inner or the outer end surfaces of the tubular segments 20. The tubular segments 20 are welded to each other in can/can welds 40 to form segment assemblies 25. The segment assembly 25 then has a top closure flange 27 and a bottom closure flange 29 welded to the ends of the segment assembly, using a submerged arc welding process, a high heat input process. The top closure flanges 27 and the bottom closure flanges 29 are also annular in shape. The top closure flange 27 and the bottom closure flange 29 of adjacent sections 15 are then bolted together along a bolt line 30 to assemble the sections together. A base flange 33 at the bottom of the tubular structure 10 and a platform flange 35 at the top of the tubular structure 10 complete the vertical layout of the structure.

The tubular structure 10 of FIG. 1 may represent a typical wind tower for supporting a wind turbine or other various kinds of support towers. For this exemplary tower of about 80m in height, the tower includes three sections, two sections being about 25m long and one section being about 30m long. The length and number of individual sections in other representative tubular structures may vary according to the application and height of the structure. The tower may be either cylindrical or conical.

For example, a tower height of 50 meters may be employed for high wind conditions and 110 meters for low wind conditions. The horizontal cross section of the exemplary tower is generally circular and may be tapered at upper levels. Tapering may be achieved by use of individual tubular segments, the tubular segments tapered as right conical sections along an axial direction. However, the horizontal cross section for the tubular segments of other representative structures may be of different geometries.

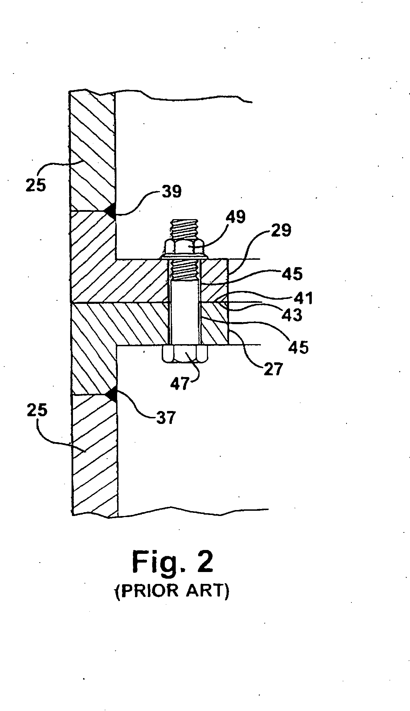

FIG. 2 illustrates a cross-sectional view of a properly aligned flange connection for sections of a tubular structure. The flange/can weld 37 connects the top closure flange 27 with the segment assembly 25 located beneath it. The flange/can weld 39 connects the associated bottom closure flange 29 with the welded segment assembly 25 located above it. Ideally, the flange mating surface 41 of the top closure flange 27 and the flange mating surface 43 of bottom closure flange 29 should be completely parallel for the throughhole 45 intended for bolt 47 and nuts 49 to be perfectly aligned with both flanges.

On-going problems with the exemplary wind turbine support tower include weld cracking, flange distortion and bolt failure during tower flexure, each contributing to the life cycle cost of the tower. Moreover, the heat generated during the flange welding process distorts the flanges.

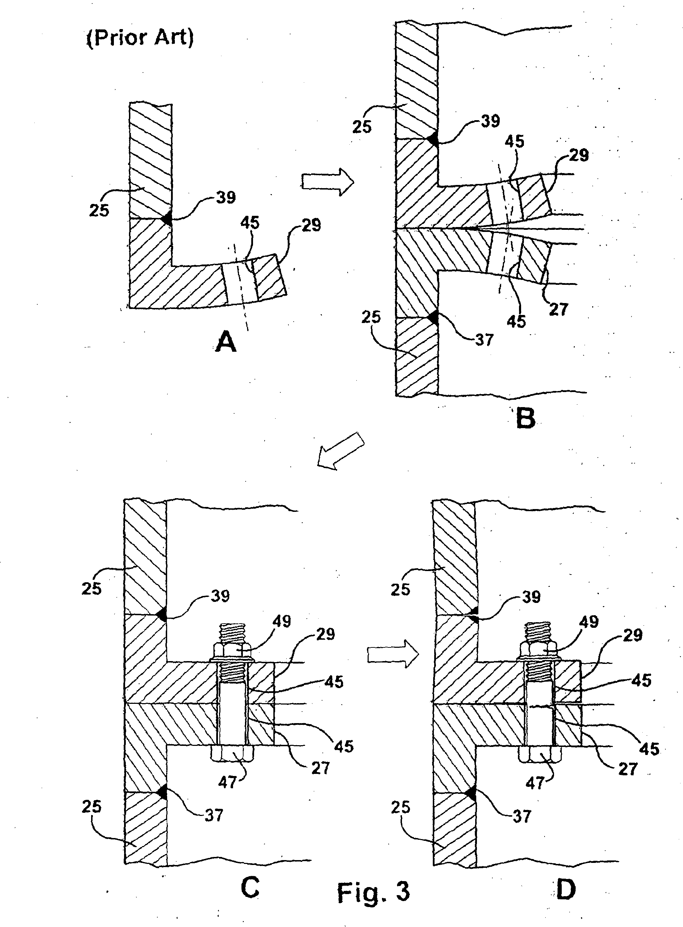

FIG. 3 illustrates a process for bolting with a distorted flange. Initially, due to the heat applied at the flange to can weld joint, the flange 29 is distorted in A. When a welded top flange 27 and a welded bottom flange 29 are brought together, the bolt lines of the throughholes 45 are misaligned in B and the tubular sections 15 (FIG. 1) are thus capped by distorted flanges. Bolts 47, used to join adjacent flanged modules 15, may be torqued until the deformed flanges are brought into alignment in C. These bolts 47 with nuts 49 may be torqued to a pre-stress level, for example about 590 Mpa, allowing the deformed flanges to be brought into alignment. This operation develops high prestress in both the welds 37 and 39 and the bolt 47, reducing the capacity to sustain service-induced loads. Such high and non-uniform prestresses in the bolts may lead to bolt failures and weld failures in D. Similar problems may also be encountered in other types of tubular support structures with similar welded flanged joints.

Welds, by nature, have inherent stress concentration features. When tubular structures, such as towers are subjected to high wind loads, the tower experiences flexural stresses. Superimposed on theses are high cycle vibration flexural stresses driven by the mass at the top of the tower. This combination of factors, in addition to the pre-stressing of assembly, places high tensile stresses on the welds and bolts leading to a high probability of weld cracking or bolt failure with the associated high maintenance costs. Bolt failure has become such a significant issue that suppliers have to machine the flange after welding to meet the flatness requirement Some tower requestors, for example, may require the supplier to measure flange flatness using a laser measurement, with anything in excess of 1.5 mm deviation from planar requiring further machining. A supplier may have to cut and re-weld flanges to meet this requirement. This may have a major impact on cost and schedule, as well as tower strength.

An additional area of concern is the flange weld inspection. It is difficult to get an accurate assessment of weld integrity since prevailing inspection techniques rely on a calibrated, non-direct, detection procedure.

Accordingly, there is a need to provide an assembly for wind turbine support tower modular sections that do not result in high stress in the connecting joints and which allow the stresses to be checked.

The present invention provides a tubular support structure according to claim 1

Various features, aspects, and advantages of the present invention will become better understood when the following detailed description is read with reference to the accompanying drawings, wherein:
FIG. 1 illustrates an exemplary tubular structure with flanged sections that are bolted together.
FIG. 2 illustrates a cross-sectional view of a properly aligned flange connection for modular sections of a tower;
FIG. 3 illustrates a process for bolting with a distorted flange;
FIG. 4 illustrates a side sectional view of an finger plate assembly;
FIG. 5 illustrates an isometric view of a typical finger plate;
FIG. 6 illustrates the relative stiffness of a finger plate assembly joint and a current short flange joint in response to tower sidesway;
FIG. 7 illustrates the flangeless joint utilizing finger plate assemblies uniformly distributed around the periphery of a tubular support structure;
FIG. 8 illustrates an axial cross section of a wind turbine support tower including flangeless joints connected with finger plate assemblies.

The following embodiments of the present invention have many advantages, including avoidance of high tensile stresses on welds and bolts leading to a probability of weld cracking or bolt failure and the associated high maintenance costs.

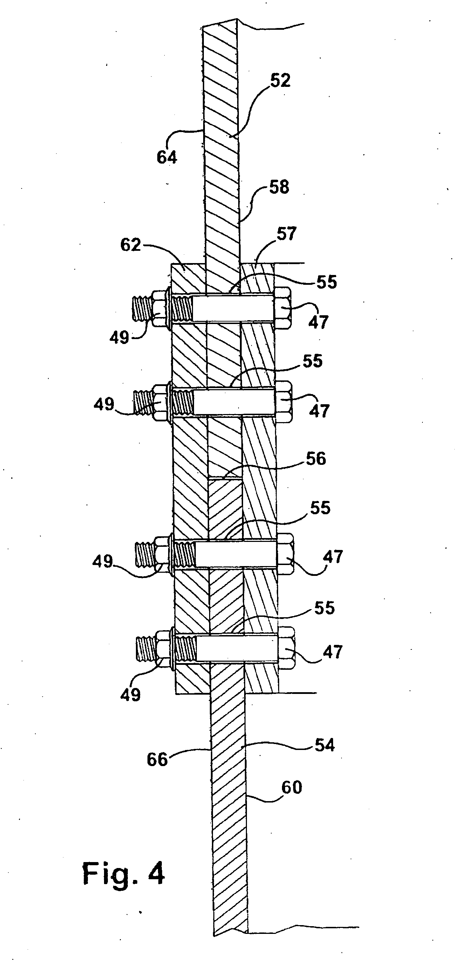

One aspect of the present invention provides finger plate assemblies to join adjacent sections of a tubular assembly. FIG. 4 illustrates a side sectional view of a finger plate assembly 50 that overcomes the previously described problem, in tubular assemblies with welded flanged joints, of flange distortion after welding. The annular rings of two adjacent flangeless modular sections 52 and 54 of the tubular assembly (without flanges) are brought together at point 56. An inner finger plate 57 is provided on an interior of the tubular assembly. The inner finger plate 57 may be provided with a curved outer diameter matched to the curved inner diameter of the flangeless modular sections 52 and 54. The inner finger plate 57 is provided for connecting the inner surfaces 58 and 60 of the adjacent flangeless sections. An outer finger plate 62 is provided on an exterior of the tubular assembly. The outer finger plate 62 may be provided with a curved inner diameter matched to the curved outer diameter of the modular sections 52 and 54. The outer finger plate 62 is provided for connecting the outer surfaces 64 and 66 of the adjacent flangeless modular sections. Fastening throughhole arrays are provided on each finger plate and are matched with the fastening throughhole array provided on the corresponding adjacent ends of the flangeless modular sections. The assembly further may further include bolts 47 and nuts 49 according to the throughhole array. However, other suitable fastening means may be utilized depending upon the particular application.

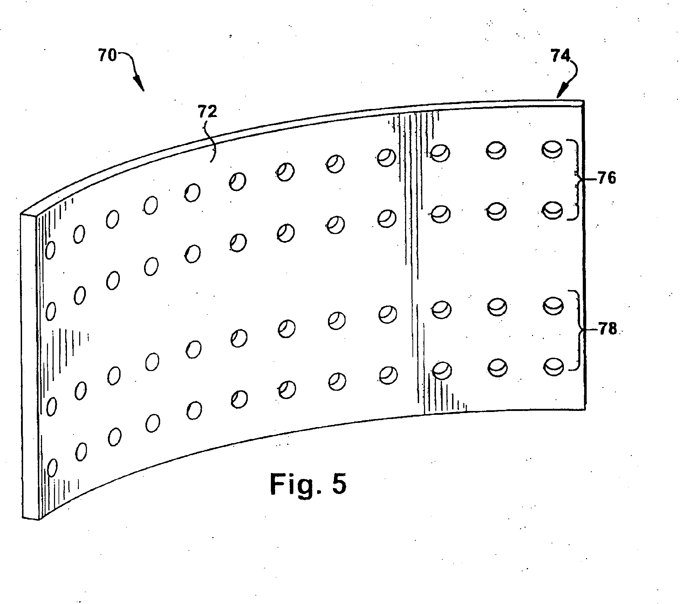

FIG. 5 illustrates an isometric view of a typical finger plate utilizing nut and bolt fastening. The typical finger plate 70 has an inner surface 72 and an outer surface 74. For an inner finger plate, its outer surface is matched to the curved outer surface of the adjacent tubular sections. For an outer finger plate, its outer surface matched to corresponding surface of adjacent tubular sections. A typical bolt throughhole array 76 is shown for connection with one tubular section and typical bolt throughhole array 78 is shown for connection with the adjacent tubular section. Finger plate design is according to standard design practice including spacing of bolt throughholes from the edge of the finger plate, spacing between adjacent bolt throughholes, thickness of the finger plate, surface dimension of the finger plate and plate material selection.

For the exemplary 80m tower, the finger plate may have an arc dimension of about 2 m, a height of about 1m, and a thickness of about 30-40 mm. The material for finger plates may preferably include ASTM A 572 Gr 50 steel plate. Bolt throughhole arrays 76 and 78 on the finger plates may be preferably configured in double rows applied to each adjacent section of tower for a total of about 48 bolt holes per finger plate. Diameter for the bolt throughholes may preferably be sized about 1.25 inch. Minimum spacing between the bolt throughholes may be about 5 inches. Typical bolts for the finger plates in the 80m tower may preferably be M36 10.9 grade bolts that are torqued to a bolt prestress of about 510 Mpa (74 ksi).

In addition to eliminating the end flanges, the discrete nature accommodates slight aberrations in tower section geometry to speed up assembly and minimize expensive re-work. The finger plate assemblies are designed with sufficient thickness, length and width to provide acceptable local and overall stiffness to address tower side-sway and stability requirements. Standard bolt design practice will determine finger plate dimensions.

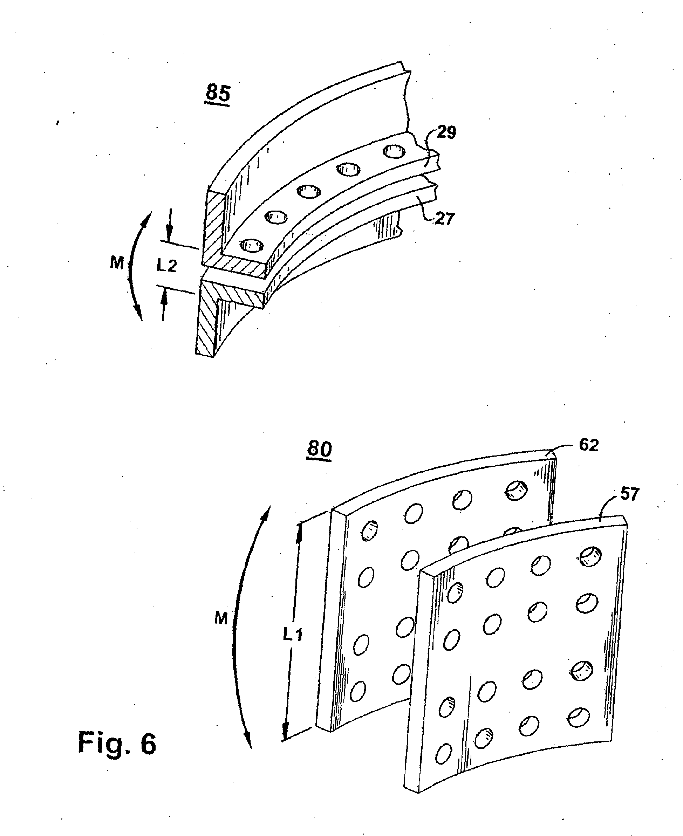

FIG. 6 illustrates the relative stiffness of a finger plate assembly joint and a current short flange joint in response to tower sidesway. Long curved finger plate assembly joint 80 of inner finger plate 57 and outer finger plate 62 provide increased joint stiffness for resisting bending due to tower sidesway. The finger plate assembly joint 80 distributes the bending moments over a longer curved surface L1 as compared to a short surface L2 of top closure flange 27 and bottom closure flange 29 available to absorb the sideway moment in the conventional flanged joint 85.

A typical flangeless joint with finger plate assemblies according to one aspect of the present invention uniformly distributes a plurality of finger plates around the periphery of adjacent sections of the tubular support structure.

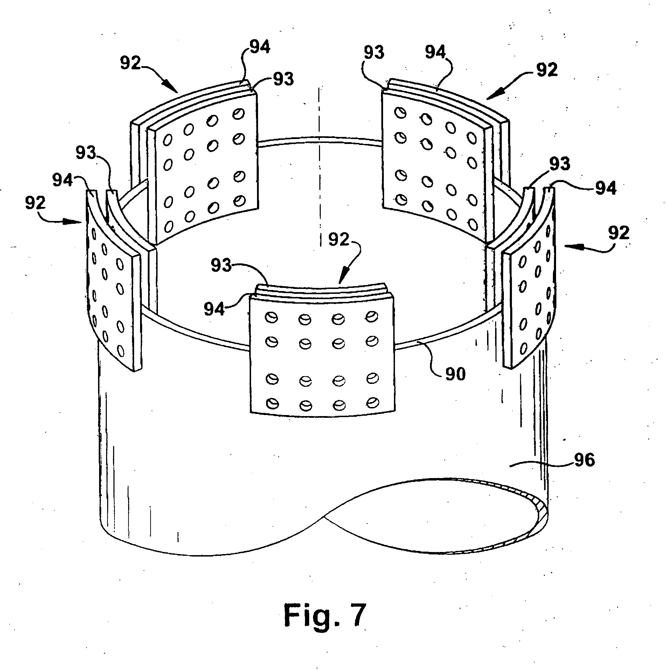

FIG. 7 illustrates a flangeless joint 90 with finger plate assemblies 92 uniformly distributed around the periphery of a lower tubular section 96. The inner finger plates 93 and outer finger plates 94 and the lower tubular section 96 are shown for clarity. An upper tubular structure and fasteners are omitted for the sake of clarity. The tubular structure may be a support tower or a wind turbine support tower. For an exemplary wind turbine support tower of about 80 m, five finger plate assemblies may be distributed around the periphery of the adjacent sections of the wind turbine support tower. Further bolting may be employed as a fastening means for the wind turbine support tower. While a simplified scheme for bolting throughholes is shown, FIG. 5 illustrates a finger plate with a more typical throughhole array for the exemplary wind turbine support tower.

The curved nature of the finger plates contributes to joint stiffness. Appropriate design of the finger plate length, thickness, and width will stiffen the joint locally and provide prescribed over-all tower stiffness for side sway, stability, and tower-head eccentric loading in a much more structurally efficient manner compared to flanged joints of prior art. The thickness and spacing of the finger plates will also be a function of the prevailing standard practice for bolted joint design. The bolt hole diameter and spacing will be a function of service conditions.

The use of finger plate assemblies replaces welding flanges to the can assemblies as the means of joining modular sections of the tower. Consequently, the distortion and prestressing problems associated with these welds and the bolts is eliminated. Further, it is difficult to get an accurate assessment of weld integrity since prevailing inspection techniques rely on a calibrated, non-direct, detection procedure. Replacing the welds with bolts allows an inspector to check each bolt for allowable pre-load using a torque wrench.

According to yet another aspect of the present invention, a tubular structure is provided that includes a plurality of tubular sections and a plurality of flangeless joints employing finger plate assemblies for connecting the adjacent tubular sections. The finger plate assemblies are uniformly distributed around the periphery of the adjacent tubular sections. The tubular structure may define a support tower and more specifically a wind turbine support tower that utilizes the finger plate assemblies for joining modular sections of the tower. The modular sections of the tower are assembled by welding tubular segments to form tower sections.

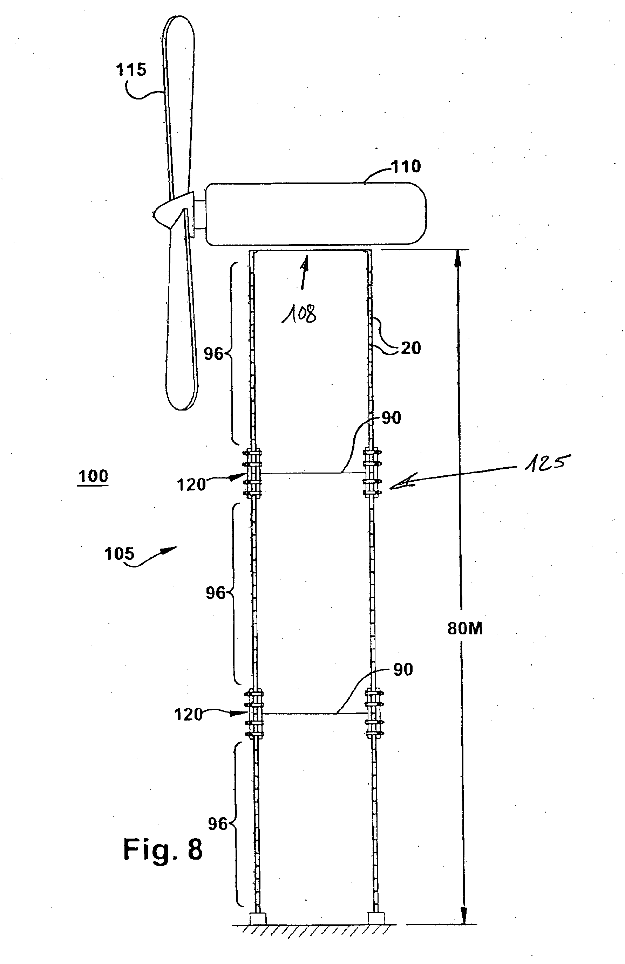

FIG. 8 illustrates an axial cross section of a wind turbine support tower 105. The wind turbine support tower 105 incorporates flangeless joints 90 utilizing finger plate assemblies 120 for connecting tower sections 96. The wind turbine support tower 105 provides support for wind turbine generator 110 and wind turbine rotor 115. The exemplary wind turbine support tower 105 is about 80m in height, incorporating three tower sections 96 and two flangeless joints 90.

In this exemplary wind turbine support tower, five finger plate assemblies may be uniformly distributed around the periphery of the flangeless joint. The tower sections may be cylindrical shaped or have a generally truncated right conical section to provide for overall reduction in cross section of tower sections at higher elevations. Further individual tubular segments may be individually tapered along the axial length to provide for the progressive reduction in cross section for each individual tower section along the axial length of the tower section.

## Claims

1. A tubular support structure (100) comprising:
a plurality of tubular sections (96); and
a plurality of flangeless joints (90) including finger plates assemblies (120) for connecting adjacent tubular sections (96), the finger plate assemblies (120) being uniformly distributed around the periphery of the adjacent tubular sections (96), **characterized in that** each finger plate assembly (12) comprising an outer finger plate (94) and an inner finger plate (93), corresponding ends of the adjacent tubular sections (96) being butted together, throughhole arrays (125) being provided on each finger plate (120), wherein connection to one of the two adjacent tubular sections (96) is provided by each throughhole array (125), a matching throughole array (125) being located on the corresponding ends of the adjacent tubular sections (96), and means to fasten the outer and inner finger plates to the adjacent tubular sections (96).

2. The tubular support structure (100) as claimed in claim 1, wherein the tubular support structure (100) comprises:
a support tower (105).

3. The tubular support structure (100) as claimed in claim 2, wherein the support tower (105) comprises:
a wind turbine support tower.

4. The tubular support structure (105) as claimed in any preceding claim, wherein the flangeless joints (90) further comprise:
five finger plate assemblies (120) uniformly distributed around the periphery of adjacent tubular sections (96).

5. The tubular support structure (100) as claimed in claim 3 or claim 4 when dependent thereon, wherein the wind turbine support tower further comprises:
a base (108) supporting the tower (105);
tubular sections joined by the flangeless joints (90);
a platform (108) connected to the top of the tubular sections (96); and
a wind turbine generator (110) and wind turbine rotor (115) supported on the platform (108).

6. The tubular support structure (105) as claimed in claim 5, wherein the tubular sections further comprise:
welded tubular segments (20).

7. The tubular support structure (120) as claimed in any of the preceding claims, wherein the tubular sections (96) include: a horizontal cross-section of a circular-shape.

8. The tubular support structure as claimed in any of the preceding claims, wherein:
the outer finger plate (94) includes a plate curved inner diameter matched to a curvature of an outer surface of the tubular sections (96) ; and
the inner finger plate (93) includes a plate with a curved outer diameter matched to a curvature of an inner surface of the tubular sections (96).

9. The tubular support structure as claimed in any of the preceding claims, wherein the means for fastening the outer and inner flange plates to the adjacent tubular sections (96) comprises nuts and bolts (109).

## Patentansprüche

1. Rohrförmige Stützstruktur (100), aufweisend:
mehrere rohrförmige Abschnitte (96); und
mehrere flanschlose Verbindungsstellen (9) mit Fingerplatteneinheiten (120) zum Verbinden benachbarter rohrförmiger Abschnitte (96), wobei die Fingerplattenabschnitte (120) gleichmäßig um den Umfang der benachbarten rohrförmigen Abschnitte (16) verteilt sind, **dadurch gekennzeichnet, dass** jede Fingerplatteneinheit (120) eine äußere Fingerplatte (94) und eine innere Fingerplatte (93) aufweist, entsprechende Enden der benachbarten rohrförmigen Abschnitte (96) aneinander anstoßen und Durchtrittslochanordnungen (125) auf jeder Fingerplatte (120) vorgesehen sind, wobei eine Verbindung zu einem von den zwei benachbarten rohrförmigen Abschnitten (96) durch jede Durchtrittslochanordnung (125) durch eine entsprechende Durchtrittslochanordnung (125), die sich auf den entsprechenden Enden der benachbarten rohrförmigen Abschnitte (96) befindet, und durch Mittel zum Befestigen der äußeren und inneren Fingerplatten an den benachbarten rohrförmigen Abschnitten (96) erzeugt wird.

2. Rohrförmige Stützstruktur (100) nach Anspruch 1, wobei die rohrförmige Stützstruktur (100):
einen Unterstützungsturm (105) umfasst.

3. Rohrförmige Stützstruktur (100) nach Anspruch 2, wobei der Unterstützungsturm (105):
einen Windkraftanlagen-Unterstützungsturm umfasst.

4. Rohrförmige Stützstruktur (100) nach einem der vorstehenden Ansprüche, wobei die flanschlosen Verbindungsstellen (90) ferner aufweisen:
fünf Fingerplatteneinheiten (120), die gleichmäßig um den Umfang benachbarter rohrförmiger Abschnitte (96) verteilt sind.

5. Rohrförmige Stützstruktur (100) nach Anspruch 3 oder 4, wenn davon abhängig, wobei der Windkraftanlagen-Unterstützungsturm ferner aufweist:
eine den Turm (105) unterstützende Basis (108);
rohrförmige Abschnitte, die durch die flanschlosen Verbindungsstellen (90) verbunden sind;
eine mit der Spitze der rohrförmigen Abschnitte (96) verbundene Plattform (108); und
einen Windkraftanlagengenerator (110) und einen Windkraftanlagenrotor (115), die von der Plattform (108) unterstützt werden.

6. Rohrförmige Stützstruktur (100) nach Anspruch 5, wobei die rohrförmigen Abschnitte ferner:
verschweißte Rohrsegmente (20) aufweisen.

7. Rohrförmige Stützstruktur (100) nach einem der vorstehenden Ansprüche, wobei die rohrförmigen Abschnitte (96) einen horizontalen Querschnitt mit einer Kreisform enthalten.

8. Rohrförmige Stützstruktur (100) nach einem der vorstehenden Ansprüche, wobei:
die äußere Fingerplatte (94) eine Platte mit einem Innenkrümmungsdurchmesser einbezieht, der an eine Krümmung einer Außenoberfläche der rohrförmigen Abschnitte (96) angepasst ist; und
die innere Fingerplatte (93) eine Platte mit einem Außenkrümmungsdurchmesser einbezieht, der an eine Krümmung einer Innenoberfläche der rohrförmigen Abschnitte (96) angepasst ist.

9. Rohrförmige Stützstruktur (100) nach einem der vorstehenden Ansprüche, wobei die Mittel zum Befestigen der äußeren und inneren Flanschplatten an den benachbarten rohrförmigen Abschnitten (96) Muttern und Schrauben (109) aufweisen.

## Revendications

1. Structure (100) de support tubulaire comprenant :
une pluralité de sections tubulaires (96) ; et
une pluralité de joints (90) sans brides comportant des ensembles (120) de plaques de propreté permettant de raccorder les sections tubulaires adjacentes (96), les ensembles (120) de plaques de propreté étant répartis uniformément à la périphérie des sections tubulaires adjacentes (96), **caractérisée en ce que** chaque ensemble (12) de plaque de propreté comprend une plaque (94) de propreté extérieure et une plaque (93) de propreté intérieure, les extrémités correspondantes des sections tubulaires adjacentes (96) venant butter les unes contre les autres, des réseaux (125) de trous traversants étant présents sur chaque plaque (120) de propreté, dans laquelle chaque réseau (125) de trous traversants est possible par le raccordement à l'une des deux sections tubulaires adjacentes (96), un réseau (125) de trous traversants d'appariement étant situé sur les extrémités correspondantes des sections tubulaires adjacentes (96), et des moyens de fixation des plaques de propreté extérieure et intérieure sur les sections tubulaires adjacentes (96).

2. Structure (100) de support tubulaire selon la revendication 1, dans laquelle la structure (100) de support tubulaire comprend:
une tour (105) de support.

3. Structure (100) de support tubulaire selon la revendication 2, dans laquelle la tour (105) de support comprend:
une tour de support d'éolienne.

4. Structure (105) de support tubulaire selon l'une des revendications précédentes, dans laquelle les joints (90) sans brides comprennent en outre :
cinq ensembles (120) de plaques de propreté répartis uniformément à la périphérie des sections tubulaires adjacentes (96).

5. Structure (100) de support tubulaire selon la revendication 3 ou 4 lorsqu'elle est subordonnée à celles-ci, dans laquelle la tour de support d'éolienne comprend en outre :
une base (108) supportant la tour (105) ;
des sections tubulaires reliées par les joints (90) sans brides;
une plateforme (108) raccordée au sommet des sections tubulaires (96) ; et
un générateur (110) d'éolienne et un rotor (115) d'éolienne supportés sur la plateforme (108).

6. Structure (105) de support tubulaire selon la revendication 5, dans laquelle les sections tubulaires comprennent en outre:
des segments tubulaires soudés (20).

7. Structure (120) de support tubulaire selon l'une des revendications précédentes, dans laquelle les sections tubulaires (96) comprennent : une section transversale horizontale de forme circulaire.

8. Structure de support tubulaire selon l'une des revendications précédentes, dans laquelle :
la plaque (94) de propreté extérieure comprend un diamètre intérieur courbe de plaque apparié à une courbure d'une surface extérieure des sections tubulaires (96) ; et
la plaque (93) de propreté intérieure comprend une plaque avec un diamètre extérieur courbe apparié à une courbure d'une surface intérieure des sections tubulaires (96).

9. Structure de support tubulaire selon l'une des revendications précédentes, dans laquelle les moyens de fixation des plaques d'appui extérieure et intérieure sur les sections tubulaires adjacentes (96) comprennent des écrous et des boulons (109).
